Europäisches Patentamt

European Patent Office

Office européen des brevets

(19)

(11) **EP 1 582 848 A1**

(12) **EUROPÄISCHE PATENTANMELDUNG**

(43) Veröffentlichungstag:
 **05.10.2005 Patentblatt 2005/40**

(51) Int Cl.⁷: **G01F 23/26**, G01F 23/14, G01N 9/26

(21) Anmeldenummer: **04405202.5**

(22) Anmeldetag: **02.04.2004**

(84) Benannte Vertragsstaaten:
 **AT BE BG CH CY CZ DE DK EE ES FI FR GB GR HU IE IT LI LU MC NL PL PT RO SE SI SK TR**
 Benannte Erstreckungsstaaten:
 **AL HR LT LV MK**

(71) Anmelder: **HECTRONIC AG**
 **CH-5200 Brugg (CH)**

(72) Erfinder: **Forster, Stefan**
 **8032 Zürich (CH)**

(74) Vertreter: **Breiter, Heinz**
 **Breiter + Partner AG**
 **Seuzachstrasse 2**
 **Postfach 366**
 **8413 Neftenbach (CH)**

(54) **Verfahren und Vorrichtung zur Prüfung von Typ und Qualität eines flüssigen Mediums in einem Tank**

(57) Bei einem Verfahren zur Prüfung von Typ und Qualität eines flüssigen Mediums in einem Tank (10), wird mit einer in das Medium eintauchenden kapazitiven Füllstandsmesssonde (12), die in Segmente in der Form einzelner Kondensatoren unterteilt ist, die Dielektrizitätszahl $\in_r$ des Medium bei verschiedenen Segmenten gemessen und

- die Differenz zwischen Segmenten (22) als Mass für eine lokal unterschiedliche Qualität des Mediums im Tank, oder

- die Differenz zu einem Referenzwert als Mass für die Abweichung der Qualität des Mediums im Tank (10) von der Qualität des dem Referenzwert entsprechenden Referenzmediums

verwendet wird. Das System ist in der Lage, Produktvermischungen als Folge einer betrügerischen Zugabe eines billigen Streckmittels zu einem sauberen Medium sowie Produktvermischungen durch unsachgemässe Kontrolle oder Versehen festzustellen bzw. zu vermeiden.

Fig. 1

EP 1 582 848 A1

**Beschreibung**

Die Erfindung betrifft ein Verfahren zur Prüfung von Typ und Qualität eines flüssigen Mediums in einem Tank. Im Rahmen der Erfindung liegt auch eine Vorrichtung zur Durchführung des Verfahrens, umfassend eine in einzelne Kondensatoren bildende Segmente unterteilte kapazitive Füllstandsmesssonde.

Füllstandsmesssysteme werden beispielsweise in unterirdischen petrochemischen Tanks bei Tankstellen eingesetzt, um den Inhalt eines Tanks für z.B. Verwaltungs- und Logistikzwecke zu messen. Neben dieser Hauptaufgabe werden Füllstandsmesssysteme auch zur Lecküberwachung verwendet. Hierzu werden üblicherweise Füllstandsdaten mit Abgabedaten von Tanksäulen verglichen, und die Differenz zwischen diesen beiden Grössen wird festgehalten. Überschreitet diese Differenz einen vorbestimmten Grenzwert, wird ein Leckalarm ausgelöst. Die Messonde selbst erfüllt die Aufgabe, den Inhalt bzw. die Änderung des Inhalts in einem Tank zu messen.

Bekannt und weit verbreitet sind die kapazitiven Messsysteme, bei denen ein sich über die ganze Füllhöhe des Tanks erstreckender Kondensator so im Tank angeordnet wird, dass die Flüssigkeit im Tank in den Kondensator eindringen kann. Die Flüssigkeit bewirkt in der Folge eine Änderung der Dielektrizität proportional zum Füllstand.

In der EP-A-0 538 182 ist eine mehrere übereinander angeordnete Kondensatoren aufweisende Füllstandsmesssonde offenbart. Aus den bekannten physikalischen Abmessungen der Kondensatoranordnung und der für ein bestimmtes Medium bekannten Dielektrizitätszahl ergibt sich aus Kapazitätsmessungen aufgrund der bekannten Formel

$$C = \varepsilon_0 \cdot \varepsilon_r \cdot \frac{A}{d}$$

C = Kapazität

A = Plattenfläche

d = Plattenabstand

$\varepsilon_0$ = elektrische Feldkonstante

$\varepsilon_r$ = Dielektrizitätszahl des Mediums

die Grenzfläche zwischen dem flüssigen Medium und dem darüber liegenden Gasraum und damit der Füllstand des Mediums im Tank.

Im Markt ist ein stetig steigendes Bedürfnis nach einem System zur Qualitätsprüfung eines Mediums festzustellen. Das System sollte in der Lage sein, Produktvermischungen als Folge einer betrügerischen Zugabe eines billigen Streckmittels zu einem sauberen Medium sowie Produktvermischungen durch unsachgemässe Kontrolle oder Versehen festzustellen bzw. zu vermeiden.

Der Erfindung liegt die Aufgabe zugrunde, eine Verfahren der eingangs genannten Art und eine zur Durchführung des Verfahrens geeignete Vorrichtung bereitzustellen, mit denen sich auch Vermischungen von Produkten mit sehr ähnlicher Dielektrizitätszahl oder Dichte feststellen lassen. Das Verfahren und die Vorrichtung sollen zudem ermöglichen, eine versehentlich falsche Befüllung eines Tanks mit einem anderen Produkt zu erkennen und gegebenenfalls einen Alarm auszulösen.

Zu einer ersten erfindungsgemässen Lösung der Aufgabe führt, dass mit einer in das Medium eintauchenden kapazitiven Füllstandsmesssonde, die in Segmente in der Form einzelner Kondensatoren unterteilt ist, die Dielektrizitätszahl $\varepsilon_r$ des Medium bei verschiedenen Segmenten gemessen und

- die Differenz zwischen Segmenten als Mass für eine lokal unterschiedliche Qualität des Mediums im Tank, oder
- die Differenz zu einem Referenzwert als Mass für die Abweichung der Qualität des Mediums im Tank von der Qualität des dem Referenzwert entsprechenden Referenzmediums

verwendet wird.

Die Daten der verschiedenen Messpunkte können beispielsweise verglichen werden, um lokale Unterschiede festzustellen und zu rapportieren, was insbesondere bei der Belieferung von noch teilweise gefüllten Tanks hilfreich ist. Die Daten können aber auch mit gespeicherten Referenzwerten verglichen werden, was erlaubt, Unterschiede gegenüber bekannten Werten festzustellen und zu rapportieren. Eine andere Möglichkeit besteht darin, Die Daten gegenüber Werten zu prüfen, welche dem System über irgendein Medium, z.B. RFID bzw. eine Datenschnittstelle beliebiger Art oder über eine Eingabeeinheit, mitgeteilt werden, um Unterschiede festzustellen und zu rapportieren.

Eine zweite erfindungsgemässe Lösung der Aufgabe besteht darin, dass mit einer in das Medium eintauchenden kapazitiven Füllstandsmesssonde, die in Segmente in der Form einzelner Kondensatoren unterteilt ist, mit einem am Sondenfuss festgelegten Differenzdrucksensor der Abstand zwischen dem Differenzdrucksensor und dem Mediumsspiegel bestimmt, die Differenz zwischen dem hydrostatischen Druck beim Differenzdrucksensor und dem Druck im Gasraum über dem Mediumsspiegel gemessen und die Differenz der aus der Abstands- und Druckmessung berechneten Dichte des Mediums zu einem Referenzdichtewert als Mass für die Abweichung der Qualität des Mediums im Tank von der Qualität des dem Referenzdichtewert entsprechenden Referenzmediums verwendet wird.

Der wesentliche Vorteil der erfindungsgemässen Verfahren liegt darin, dass sie mit denselben Vorrichtungen, mit denen der Füllstand gemessen wird, durchgeführt werden können. Es sind somit keine zusätzlichen Änderungen an einem Tank mit einer kapazitiven Füllstandsmesssonde erforderlich.

Bei einer bevorzugten Kombination der beiden erfindungsgemässen Verfahren wird eine Differenz zwischen den bei verschiedenen Segmenten gemessenen Dielektrizitätszahlen $\varepsilon_r$ als zusätzliches Mass für die Abweichung der Qualität des Mediums im Tank von der Qualität des dem Referenzwert entsprechenden Referenzmediums verwendet.

Wird beispielsweise einem Medium in einem Tank von aussen ein Medium unterschiedlicher Dichte zugeführt, so ergeben sich zunächst Bereiche mit unterschiedlichen Dichten, die sich erst nach einer gewissen Zeit, wenn sich die beiden Medien vollständig vermischt haben, auf den Dichtewert der Mischung einstellen. Da die Dichtemessung nur eine über das gesamte Volumen gemessene Dichte liefert, können lokale Dichteunterschiede über eine blosse Dichtemessung nicht festgestellt werden. In diesem Fall können lokal unterschiedliche Dielektrizitätszahlen Hinweise auf eine z.B. als Folge der Zugabe eines fremden Mediums eintretende, nicht über das gesamte Volumen homogen verteilte Dichte liefern.

Aufgrund der Dielektizitätsmessungen auf unterschiedlichen Niveaus lässt sich feststellen, ob die gemessene Dichte als homogen über das ganze Medium angesehen werden kann. Auf diese Weise lässt sich beispielsweise feststellen, wenn einem Medium im Tank ein Medium mit unterschiedlicher Dichte zugeführt wird.

Bevorzugt werden gemessene Werte direkt in einer in der Füllstandsmesssonde angeordneten Elektronik ausgewertet.

Einer zur Durchführung des erfindungsgemässen Verfahrens geeignete Vorrichtung umfasst eine in einzelne Kondensatoren bildende Segmente unterteilte kapazitive Füllstandsmesssonde, an deren Sondenfuss ein Differenzdrucksensor angeordnet ist.

Mit zusätzlichen Temperaturmessungen an einer oder mehreren Positionen kann die Temperaturabhängigkeit der Dichtemessung anhand der Temperatur kompensiert werden.

Bei einer besonders bevorzugten Vorrichtung umfasst die Füllstandsmesssonde ein metallisches Aussenrohr mit einem im Innern des Aussenrohres konzentrisch zu diesem angeordneten, in einzelne Kondensatoren bildende Rohrsegmente unterteilten Innenrohr und der Differenzdrucksensor ist an der den Sondenfuss bildenden Stirnseite des Aussenrohres festgelegt ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in

- Fig. 1    einen Querschnitt durch einen Tank mit in diesem angeordneter Füllstandsmesssonde;
- Fig. 2    einen Längsschnitt durch einen Teil der Füllstandsmesssonde von Fig. 1;
- Fig. 3    einen Längsschnitt durch ein vergrössertes Detail von Fig.2.

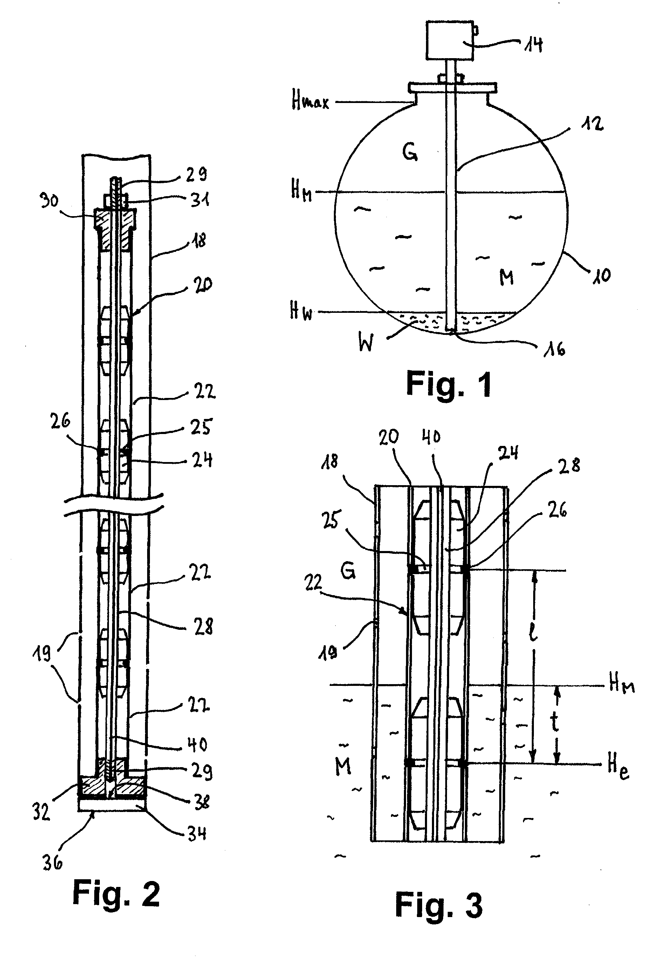

Ein in Fig. 1 gezeigter Tank 10 mit einem Durchmesser von beispielsweise 2500 mm, wie er bei Tankstellen als unterirdischer Tank für Benzin und Diesel eingesetzt wird, ist mit einer in vertikaler Lage eingebauten Füllstandsmesssonde 12 mit einem ausserhalb des Tanks liegenden, eine mikroprozessorgesteuerte Sondenelektronik enthaltenden Sondenkopf 14 ausgestattet. Die Füllstandsmesssonde 12 ist so in den Tank 10 eingeschraubt, dass der Sondenfuss 16 knapp über der tiefsten Stelle des Tanks zu liegen kommt.

Im Tankinneren befindet sich am Boden eine kleine Menge Wasser W, darüber ein Medium M, z.B. Benzin, und im Gasraum G über dem Medium M ein mit dem Medium angereichertes Luftgemisch. Der im Gasraum herrschende Druck kann je nach Tankkonstruktion und Temperaturbedingungen zwischen einem schwachen Unterdruck bis zu einem Überdruck von 1,5 bar und höher schwanken.

Der Messbereich der Füllstandsmesssonde 12 beginnt nahe der tiefsten Stelle im Tank 10 in einem Abstand von etwa 25 mm über dem Sondenfuss 16. In den untersten 100 mm vom Sondenfuss 16 wird der Füllstand $H_W$ von sich am Tankboden ansammelndem Wasser gemessen, darüber der Füllstand des Mediums $H_M$. Der maximale Füllstand $H_{max}$ entspricht etwa dem Tankdurchmesser.

Die mikroprozessorgesteuerte Sondenelektronik im Sondenkopf 16 ist zur Stromversorgung in bekannter, in der Zeichnung nicht näher dargestellter Weise mit einer elektrischen Spannungsquelle mit z.B. 12V und 50mA Leistung und mit einem PC oder einer anderen Einrichtung zur Auswertung von Messsignalen verbunden.

Wie in Fig. 2 gezeigt, weist die Füllstandsmesssonde 12 ein Aussenrohr 18 aus nicht rostendem Stahl und ein im Innern des Aussenrohres 18 konzentrisch zu diesem angeordnetes, aus aneinander gereihten und von einander elektrisch isolierten Rohrsegmenten 22 aus nicht rostendem Stahl zusammengesetztes Innenrohr 20 auf. Jeweils zwei aufeinander folgende Rohrsegmente 22 sind über eine in die Rohrsegmente 22 eingeführte Segmentkupplung 24 axial ausgerichtet. Die Segmentkupplungen 24 weisen in ihrer Längsmitte eine Ringnut 25 mit einem in dieser eingesetzten, von der Kupplungsoberfläche abragenden und nach dem Zusammenbau mit der Aussenfläche der Rohrsegmente 22 fluchtenden Dichtungsring 26 aus Teflon oder einem anderen elektrisch isolierendem Material auf. Die Segmentkupplungen 24 und die auf diesen sitzenden Rohrsegmente 22 sind auf einem Stab 28, auf dem die Segmentkupplungen 24 gleitend verschiebbar sind, aufgereiht. Der an beiden Enden mit einem Gewinde 29 versehene Stab 28 ist im Bereich des Sondenfusses 16 in eine das Aussenrohr 18 verschliessende Endkappe 32 eingeschraubt. Das andere Ende des Stabes 28 durchdringt eine in das Innenrohr 20 bzw. ein Rohrsegment 22 stirnseitig eingesetztes Flanschteil 30. Über eine auf den Stab 30 aufgeschraubte und dem als Widerlager dienenden Flanschteil 30 anliegende Mutter 31 werden die Rohrsegmente 22 mit den dazwischen liegenden Dichtungsringen 26 beim Anziehen der Mutter 31 in axialer Richtung fixiert.

Der Stab 30 mit den auf diesem aufgereihten Rohrsegmenten 22 ist - in der Zeichnung nicht dargestellt - an dem gegen den Sondenkopf 14 weisenden Ende über elastische Druckelemente an der Innenwand des Aussenrohres 18 fixiert. Das Aussenrohr 18 weist über die Länge verteilt angeordnete Öffnungen 19 zum ungehinderten Durchfluss der Medien in den Raum zwischen dem Aussenrohr 18 und dem aus den Rohrsegmenten 22 gebildeten Innenrohr 20 auf. Das Innere der Rohrsegmente 22 ist gegenüber den Medien fluiddicht abgetrennt.

Jedes Rohrsegment 22 ist über ein im Segmentinnern verlaufendes, in der Zeichnung nicht gezeigtes elektrisches Kabel mit der Sondenelektronik im Sondenkopf 14 verbunden.

An der Aussenseite der Endkappe 32 ist ein Differenzdrucksensor 34 festgelegt. Dieser Differenzdrucksensor 34 steht über eine erste Sensorseite 36 mit dem Medium in der Nähe des Tankbodens und über die vom Medium fluiddicht getrennte zweite Sensorseite 38 über eine Längsbohrung 40 im Stab 28 mit dem Gasraum G über dem Medium M in Verbindung.

Die Füllstandsmesssonde 12 arbeitet nach der kapazitiven Vergleichsmethode, indem sie durch Vergleich der Kapazitäten der einzelnen Rohrsegmente 22 sofort alle Rohrsegmente mit gleichen Kapazitäten erkennt, nämlich alle vollständig eingetauchten und alle vollständig trockenen Segmente. Die eigentliche Füllstandsbestimmung erfolgt mit einer hohen Auflösung von ca. 0,1 mm an demjenigen Rohrsegment 22, das - wie in Fig. 3 gezeigt - nur bis zu dem den Füllstand $H_M$ definierenden Niveau in das Medium eingetaucht ist. Ausgehend von dem durch die Anzahl vollständig eingetauchter Rohrsegmente 22 definierten Niveau $H_e$ ergibt sich der Füllstand $H_M$ aus der Messung der Kapazität $C_t$ des teilweise eingetauchten Abschnitts einer Länge t und der Kapazität $C_v$ eines vollständig eingetauchten Rohrsegmentes 22 mit bekannter Länge I durch die Beziehung

$$H_M = H_e + I \cdot C_t / C_v$$

Durch die kapazitive Mehrsegment-Messung erkennt die Füllstandsmesssonde 12 nicht nur den Standort des Niveaus des Mediums M, sondern ermöglicht auch einen Selbstkalibrierungprozess in Medien mit sich verändernder Dielektrizitätszahl. Dieser Umstand wird nun erfindungsgemäss zur empirischen Ermittlung der mediumsabhängigen Dielektrizitätszahl $\varepsilon_r$ genutzt. Dies gelingt, weil die physikalischen Abmessungen der Sonde ja genau bekannt sind.

Zusammen mit dem integrierten Differenzdrucksensor 34 lässt sich mit der genauen Füllstandsmesssonde 12 die Dichte des Mediums aufgrund der Kenntnis des Füllstandes immer über 100 % des Mediums errechnen, und nicht wie üblich zwischen zwei gegebenen Fixpunkten, wobei die Dichtemessung einen allfälligen Über- oder Unterdruck im Tank in die Rechnung mit einbezieht.

**Patentansprüche**

1. Verfahren zur Prüfung von Typ und Qualität eines flüssigen Mediums in einem Tank (10), bei dem mit einer in das Medium eintauchenden kapazitiven Füllstandsmesssonde (12), die in Segmente (22) in der Form einzelner Kondensatoren unterteilt ist, die Dielektrizitätszahl $\varepsilon_r$ des Medium bei verschiedenen Segmenten (22) gemessen und

   - die Differenz zwischen Segmenten (22) als Mass für eine lokal unterschiedliche Qualität des Mediums im Tank, oder
   - die Differenz zu einem Referenzwert als Mass für die Abweichung der Qualität des Mediums im Tank (10) von der Qualität des dem Referenzwert entsprechenden Referenzmediums

   verwendet wird.

2. Verfahren zur Prüfung von Typ und Qualität eine flüssigen Mediums in einem Tank (10), bei dem mit einer in das Medium eintauchenden kapazitiven Füllstandsmesssonde (12), die in Segmente (22) in der Form einzelner Kondensatoren unterteilt ist, mit einem am Sondenfuss (16) festgelegten Differenzdrucksensor (34) der Abstand zwischen dem Differenzdrucksensor (34) und dem Mediumsspiegel bestimmt, die Differenz zwischen dem hydrostatischen Druck beim Differenzdrucksensor (34) und dem Druck im Gasraum über dem Mediumsspiegel gemessen und die Differenz der aus der Abstands- und Druckmessung berechneten Dichte des Mediums zu einem Referenzdichtewert als Mass für die Abweichung der Qualität des Mediums im Tank (10) von der Qualität des dem Referenzdichtewert entsprechenden Referenzmediums verwendet wird.

3. Verfahren nach Anspruch 1 und 2, **dadurch gekennzeichnet, dass** eine Differenz zwischen den bei verschiedenen Segmenten (22) gemessenen Dielektrizitätszahlen $\varepsilon_r$ als zusätzliches Mass für die Abweichung der Qualität des Mediums im Tank von der Qualität des dem Referenzwert entsprechenden Referenzmediums verwendet wird.

4. Verfahren nach einem der Ansprüche 1 bis 3, **dadurch gekennzeichnet, dass** gemessene Werte direkt in einer in der Füllstandsmesssonde (12) angeordneten Elektronik ausgewertet werden.

5. Vorrichtung zur Durchführung des Verfahrens nach einem der vorangehenden Ansprüche, umfassend eine in einzelne Kondensatoren bildende Segmente (22) unterteilte kapazitive Füllstandsmesssonde (12), **dadurch gekennzeichnet, dass** am Sondenfuss (16) der Füllstandsmesssonde (12) ein Differenzdrucksensor (34) angeordnet ist.

6. Vorrichtung nach Anspruch 4, **dadurch gekennzeichnet, dass** die Füllstandsmesssonde (12) ein metallisches Aussenrohr (18) mit einem im Innern des Aussenrohres (18) konzentrisch zu diesem angeordneten, in einzelne Kondensatoren bildende Rohrsegmente (22) unterteilten Innenrohr (20) umfasst und der Differenzdrucksensor (34) an der den Sondenfuss (16) bildenden Stirnseite des Aussenrohres (18) festgelegt ist.

**Fig. 1**

**Fig. 2**

**Fig. 3**

**Europäisches Patentamt**

**EUROPÄISCHER RECHERCHENBERICHT**

Nummer der Anmeldung

EP 04 40 5202

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 578 416 B1 (MASON CLAYTON R ET AL) 17. Juni 2003 (2003-06-17) | 1,3,4 | G01F23/26 G01F23/14 |
| Y | * Spalte 1, Zeile 61 - Spalte 2, Zeile 33 * | 2,5 | G01N9/26 |
| | * Spalte 3, Zeile 33 - Spalte 4, Zeile 11 * | | |
| | * Spalte 5, Zeilen 1-62 * | | |
| | * Spalte 6, Zeile 42 - Spalte 7, Zeile 7 * | | |
| | * Spalte 8, Zeile 63 - Spalte 9, Zeile 50 * | | |
| | * Abbildungen 1-3,6 * | | |
| | ----- | | |
| X | PATENT ABSTRACTS OF JAPAN Bd. 1995, Nr. 11, 26. Dezember 1995 (1995-12-26) -& JP 07 218318 A (KAJIMA CORP), 18. August 1995 (1995-08-18) * Zusammenfassung; Abbildungen 1,2 * | 1 | |
| | ----- | | |
| A | PATENT ABSTRACTS OF JAPAN Bd. 1999, Nr. 04, 30. April 1999 (1999-04-30) -& JP 11 006755 A (YOKOGAWA ELECTRIC CORP), 12. Januar 1999 (1999-01-12) * Zusammenfassung; Abbildungen 1-4 * | 1 | RECHERCHIERTE SACHGEBIETE (Int.Cl.7) G01F G01N |
| | ----- | | |
| A | US 6 138 508 A (NICKOLIN THOMAS M ET AL) 31. Oktober 2000 (2000-10-31) * Spalte 1, Zeilen 21-59 * * Spalte 7, Zeile 39 - Spalte 11, Zeile 33 * * Abbildungen 1,2 * | 1,3,4 | |
| | ----- | | |
| A | FR 2 737 297 A (SNECMA) 31. Januar 1997 (1997-01-31) * Seite 7, Spalte 36 - Seite 8, Spalte 21; Abbildungen 1,2 * | 1,3,4 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 9. November 2004 | Roetsch, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                                   
& : Mitglied der gleichen Patentfamilie, übereinstimmendes Dokument

EPO FORM 1503 03.82 (P04C03)

Europäisches
Patentamt

**EUROPÄISCHER RECHERCHENBERICHT**

Nummer der Anmeldung

EP 04 40 5202

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | WO 97/21988 A (BAKER HUGHES INC) 19. Juni 1997 (1997-06-19) * Seite 6, Zeile 22 - Seite 7, Zeile 18 * * Seite 8, Zeile 27 - Seite 15, Zeile 6 * * Seite 20, Zeile 16 - Seite 24, Zeile 26 * * Ansprüche 1,9-11 * * Abbildungen 1,2,6-8 * | 2,5 | |
| A | PATENT ABSTRACTS OF JAPAN Bd. 017, Nr. 609 (P-1640), 9. November 1993 (1993-11-09) & JP 05 187905 A (TOSHIBA CORP), 27. Juli 1993 (1993-07-27) * Zusammenfassung * | 5 | |
| A,D | EP 0 538 182 A (HECTRONIC AG) 21. April 1993 (1993-04-21) * Zusammenfassung; Abbildungen 1-6 * | 6 | |
| A | EP 1 153 784 A (EATON CORP) 14. November 2001 (2001-11-14) * Zusammenfassung; Abbildung 1 * | 2,5,6 | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| München | 9. November 2004 | Roetsch, P |

EPO FORM 1503 03 82 (P04C03)

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche
erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende
europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den
Anforderungen an die Einheitlichkeit der Erfindung und enthält mehrere Erfindungen oder
Gruppen von Erfindungen, nämlich:

Siehe Ergänzungsblatt B

☒ Alle weiteren Recherchengebühren wurden innerhalb der gesetzten Frist entrichtet. Der vorliegende
europäische Recherchenbericht wurde für alle Patentansprüche erstellt.

☐ Da für alle recherchierbaren Ansprüche die Recherche ohne einen Arbeitsaufwand durchgeführt werden
konnte, der eine zusätzliche Recherchengebühr gerechtfertigt hätte, hat die Recherchenabteilung
nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf
Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende
europäische Recherchenbericht wurde für die Teile der Anmeldung erstellt, die sich auf die zuerst in den
Patentansprüchen erwähnte Erfindung beziehen, nämlich Patentansprüche:

**Europäisches Patentamt**

**MANGELNDE EINHEITLICHKEIT
DER ERFINDUNG
ERGÄNZUNGSBLATT B**

Nummer der Anmeldung

EP 04 40 5202

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1,3-4

   Ein Verfahren zur Ermittlung der relativen Qualität eines flüssigen Mediums in einem Tank bezogen auf ein Referenzmedium.
   ---

2. Ansprüche: 2,5-6

   Ein Verfahren und eine Vorrichtung zur genaueren Prüfung von Typ und Qualität eines flüssigen Mediums in einem Tank
   ---

## ANHANG ZUM EUROPÄISCHEN RECHERCHENBERICHT
## ÜBER DIE EUROPÄISCHE PATENTANMELDUNG NR.

EP 04 40 5202

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-11-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 6578416 | B1 | 17-06-2003 | AU<br>CA<br>EP<br>JP<br>WO | 7360200 A<br>2384677 A1<br>1210566 A1<br>2003508775 T<br>0118503 A1 | 10-04-2001<br>15-03-2001<br>05-06-2002<br>04-03-2003<br>15-03-2001 |
| JP 07218318 | A | 18-08-1995 | KEINE | | |
| JP 11006755 | A | 12-01-1999 | KEINE | | |
| US 6138508 | A | 31-10-2000 | US<br>US<br>AU<br>WO<br>US | 5406843 A<br>6125696 A<br>8090894 A<br>9512112 A1<br>5613399 A | 18-04-1995<br>03-10-2000<br>22-05-1995<br>04-05-1995<br>25-03-1997 |
| FR 2737297 | A | 31-01-1997 | FR | 2737297 A1 | 31-01-1997 |
| WO 9721988 | A | 19-06-1997 | AU<br>WO<br>ZA | 1806897 A<br>9721988 A2<br>9610562 A | 03-07-1997<br>19-06-1997<br>20-06-1997 |
| JP 05187905 | A | 27-07-1993 | KEINE | | |
| EP 0538182 | A | 21-04-1993 | CH<br>EP | 682845 A5<br>0538182 A1 | 30-11-1993<br>21-04-1993 |
| EP 1153784 | A | 14-11-2001 | US<br>BR<br>CA<br>EP<br>JP<br>TW | 6282953 B1<br>0102555 A<br>2346737 A1<br>1153784 A2<br>2002013962 A<br>548207 B | 04-09-2001<br>25-02-2003<br>12-11-2001<br>14-11-2001<br>18-01-2002<br>21-08-2003 |

EPO FORM P0461

Für nähere Einzelheiten zu diesem Anhang : siehe Amtsblatt des Europäischen Patentamts, Nr.12/82